(19) Europäisches Patentamt
European Patent Office
Office européen des brevets

(11) **EP 0 608 024 B1**

(12) **FASCICULE DE BREVET EUROPEEN**

(45) Date de publication et mention
de la délivrance du brevet:
**18.04.2001 Bulletin 2001/16**

(51) Int Cl.⁷: **H04L 7/027**, H04J 13/00

(21) Numéro de dépôt: **94200086.0**

(22) Date de dépôt: **14.01.1994**

(54) **Système de transmission avec récupération de rythme**

Übertragungssystem mit Taktrückgewinnung

Transmission system with clock recovery

(84) Etats contractants désignés:
**DE FR GB IT SE**

(30) Priorité: **20.01.1993 FR 9300539**

(43) Date de publication de la demande:
**27.07.1994 Bulletin 1994/30**

(60) Demande divisionnaire:
**00201832.3 / 1 035 699**

(73) Titulaire: **Koninklijke Philips Electronics N.V.**
**5621 BA Eindhoven (NL)**

(72) Inventeur: **Hayet, Pascal, Société Civile S.P.I.D.**
**F-75008 Paris (FR)**

(74) Mandataire: **Landousy, Christian et al**
**Société Civile S.P.I.D.**
**156, Boulevard Haussmann**
**75008 Paris (FR)**

(56) Documents cités:
**EP-A- 0 369 917**          **FR-A- 2 639 495**
**US-A- 3 599 103**          **US-A- 3 883 729**
**US-A- 4 696 056**

• MICROPROCESSORS AND MICROSYSTEMS,
vol.12, no.4, 1 Mai 1988, LONDON GB pages 214
- 224, XP98953 JOHN ELDON 'Applications of the
digital correlator.'

**Description**

L'invention concerne un système de transmission comprenant un émetteur et un récepteur de signaux, ledit récepteur comportant des moyens de corrélation. L'invention concerne également un récepteur mis en oeuvre dans un tel système de transmission.

L'article intitulé "Applications of the digital correlator" de John Eldon publié dans la revue "Microprocessor and microsystems", vol 12, n°4, 1er mai 1988, pages 214-224, décrit l'utilisation de moyens de corrélation pour détecter des mots particuliers de synchronisation et des périodicités dans un signal reçu.

L'invention consiste notamment à appliquer un tel enseignement à un système de transmission de signaux formatés en blocs, lesdits blocs étant issus de symboles d'une constellation et ayant une redondance d'information, c.-à-d. un même bloc renferme une même information présente une première et une deuxième fois. Il peut, par exemple, s'agir de signaux obtenus par répartition multiplexée de N fréquences orthogonales (OFDM : Orthogonal Frequency Division Multiplexing) qui consiste à fractionner une information à transmettre en la répartissant sur un grand nombre de canaux élémentaires à bas débit. On transforme ainsi un canal à large bande fortement sélectif en un grand nombre de canaux élémentaires non sélectifs. Comme l'ensemble constitue un canal à large bande, il est peu probable que des évanouissements en cours de transmission affectent simultanément la totalité du canal. Cette technique permet notamment de réduire les interférences intersymboles.

A chaque canal élémentaire correspond alors une fréquence, l'ensemble des fréquences étant symétriquement réparti autour d'une fréquence porteuse centrale. Comme à la réception il est difficilement acceptable d'utiliser des filtres sélectifs, on préfère tolérer un recouvrement des spectres mais en imposant des conditions d'orthogonalité entre les fréquences pour éliminer l'interférence intersymbole aux instants d'échantillonnage. L'ensemble du spectre d'un signal OFDM tend ainsi vers un spectre rectangulaire.

A la réception, les signaux reçus doivent être démodulés puis décodés pour restituer les informations d'origine. Cette démodulation met en oeuvre un oscillateur local dont la fréquence doit être asservie à la fréquence d'émission.

Le signal OFDM est organisé par trames formées de blocs dont certains sont des blocs de service et d'autre des blocs de données. Pour éviter les interférences intersymboles, chaque bloc contient des informations redondantes. Un bloc quelconque est formé par toutes les fréquences OFDM que met en oeuvre le dispositif, les fréquences étant modulées par des symboles à transmettre issus d'une modulation codée par exemple une modulation numérique MDP ou MAQ. A l'émission, ces symboles sont codés à un certain rythme qu'il faut retrouver à la réception afin de pouvoir les décoder correctement. L'invention se propose donc de retrouver à la réception le rythme utilisé à l'émission.

On connaît le document FR 2 639 495 qui décrit un procédé de diffusion de données numériques utilisant une technique OFDM. Le procédé de récupération de la synchronisation est effectué sur la trame en utilisant deux blocs spécifiques qui sont un bloc nul en début de trame, et un bloc de wobulation. Ce document met en avant l'intérêt qu'il présente de ne pas synchroniser une horloge de rythme au niveau binaire comme dans les techniques antérieures. Ce document ouvre ainsi des fenêtres d'acquisition des données binaires qu'il considère comme ayant une précision suffisante pour décoder les données binaires.

Mais en effectuant une synchronisation une fois par trame, une trame ayant par exemple une durée de 20 ms, la précision de la synchronisation reste insuffisante.

Le but de l'invention est d'effectuer une synchronisation de rythme pour un signal formaté par blocs, renfermant eux-mêmes des informations redondantes, sans utiliser des mots de synchronisation.

Ces buts sont atteints en effectuant une récupération de rythme en utilisant des données reçues à la cadence des blocs. Pour cela, un système de transmission selon l'invention est caractérisé en ce que:

- lesdits signaux étant formatés en blocs, lesdits blocs étant issus de symboles d'une constellation et comportant chacun des informations, dites informations identiques, constituées par une partie de l'information utile transmise dans le bloc et une copie de cette partie placée en décalage dans ledit bloc avant l'émission,
- lesdits moyens de corrélation effectuent une corrélation entre lesdites informations identiques pour générer un signal dit signal d'écart dont la fréquence est représentative de la fréquence bloc, ledit signal d'écart étant fourni à des moyens d'asservissement à division de fréquence pour asservir un oscillateur à la fréquence symbole du signal reçu.

Ainsi avantageusement l'invention utilise la redondance des données contenues dans chaque bloc pour améliorer fortement la qualité de la synchronisation.

Dans le cas particulier d'un signal OFDM, avec une trame contenant 125 blocs, on peut estimer que la précision de la récupération de rythme est améliorée d'un facteur 125 environ.

Préférentiellement, les moyens de corrélation comprennent des moyens de retard retardant les signaux reçus d'un délai séparant lesdites informations identiques, pour générer ledit signal d'écart.

Pour soustraire l'un de l'autre les groupes de données présents en début et en fin de chaque bloc, on utilise des moyens de retard qui forment une réplique retardée du signal reçu, réplique qui est soustraite du signal reçu lui-même pour délivrer un signal de commande accordé sur la cadence bloc.

Ce signal de commande agit sur une boucle à verrouillage de phase pour asservir, à l'aide d'une division de fréquence, un oscillateur dont la fréquence d'oscillation est beaucoup plus élevée que la fréquence bloc et qui fournit l'horloge de rythme.

L'invention utilise certains moyens qui, pris isolément, sont connus de l'état de la technique. On notera par exemple que le brevet américain n° 3,883,729 décrit une méthode par corrélation pour retrouver les mots de synchronisation contenus dans une trame à multiplexage temporel. La méthode décrite tire partie du fait que ces mots de synchronisation se retrouvent à l'identique à intervalles de temps réguliers dans la trame. Par ailleurs le brevet américain n° 3,599,103 décrit l'utilisation d'une ligne de retard, d'un soustracteur et d'une boucle à verrouillage de phase dans le but de caler en phase l'horloge d'échantillonnage d'un récepteur d'un système de transmission analogique dans lequel les données sont codées par décalage de phase.

Ces différents aspects de l'invention et d'autres encore seront apparents et élucidés à partir des modes de réalisation décrits ci-après.

L'invention sera mieux comprise à l'aide des figures suivantes données à titre d'exemples non limitatifs qui représentent :

> Figure 1 : un chronogramme indiquant la génération d'un signal d'écart à la cadence bloc.
> Figure 2 : un schéma d'un dispositif de récupération de rythme selon l'invention disposé dans un récepteur.

La description qui suit est développée dans le cas particulier d'un signal OFDM, mais elle s'applique également à d'autres signaux formatés par blocs pour lesquels chaque bloc renferme des informations redondantes.

La technique OFDM consiste à multiplexer en fréquence plusieurs porteuses orthogonales modulées par les symboles. Un symbole OFDM peut s'écrire :

$$(1) \quad s(t) = R_e \left\{ e^{2i\pi f_o t} \sum_{k=0}^{N-1} x_k \cdot \phi_k(t) \right\}$$

pour

$$j. \, T'_s < t < (j+1) \, T'_s$$

avec

$$\phi_k(t) = e^{2i\pi k t / T_s} \, pour \, jT'_s \leq k \leq (j+1) \, T'_s$$

où :

> $T'_S$ : durée totale d'un symbole OFDM, $T'_S = T_S + \Delta$.
> $R_e$ : partie réelle d'un nombre complexe.
> k : indice des porteuses orthogonales.
> $T_S$ : durée utile d'un symbole OFDM.
> $\Delta$ : intervalle de garde.
> N : nombre maximal de porteuses.
> $f_o$ : fréquence arbitraire.
> j : indice du symbole OFDM.

Ainsi entre les instants $j.T'_S$ et $(j+1) \, T'_S$, un signal OFDM est constitué par un bloc de symboles complexes $x_k$, chaque symbole $x_k$ modulant une porteuse orthogonale $0 \leq k \leq N-1$.

Pour éviter le problème de recouvrement de spectre et pour faciliter le filtrage à la réception, la somme correspondant à l'équation (1), est effectuée sur $N_u$ porteuses où $N_u$ est le nombre de porteuses utiles ($N_u < N$).

Pour réaliser la modulation OFDM, c'est-à-dire former le signal s(t) de l'équation 1, on utilise un modulateur qui effectue un calcul d'une transformée de Fourier rapide inverse ($FFT^{-1}$). Pour cela on choisit pour N un nombre de la forme $2^x$ où x est un nombre entier. On insère également d'autres blocs de contrôle destinés à la transmission.

Les paramètres choisis sont, par exemple, les suivants :

T'$_S$ = 160 μs, T$_S$ = 128 μs et Δ = 32 μs,
N = 1024 porteuses, N$_u$ = 900 porteuses.

L'intervalle de garde Δ a pour rôle principal d'absorber les échos provenant du canal multitrajets et ayant des retards inférieurs à Δ. Durant l'intervalle de garde (qui est préférentiellement égal au quart de la durée utile), un signal identique à celui d'une partie de la durée utile est transmis.

Le choix de N$_u$ = 900 provient du fait que la bande autour de chaque porteuse étant de 1/T$_S$ = 7,81 KHz, il faut 900 porteuses pour avoir une bande effective du signal transmis d'environ 7 MHz (la largeur de bande exacte étant de 7,031 MHz).

Les blocs à la sortie d'un codeur de canal sont transmis par trames. Ainsi une trame regroupe plusieurs blocs OFDM multiplexés temporellement. Un bloc OFDM peut contenir des données ou peut être un bloc particulier servant à la synchronisation (de trame, de rythme, de porteuse) ou servant comme bloc de référence pour la modulation différentielle.

Un exemple de structure de trame est donné par :

| 1 | 2 | 3 | 4 | 5 | 6 | 7 | | j-1 | j | | 125 |
|---|---|---|---|---|---|---|---|---|---|---|---|
| Nul | AFC | Wob | EXT 1 | EXT 2 | DATA 1 | DATA 2 | | | | | DATA 120 |

$T_S$ = 160 μs

$T_f$ = 20 ms

TABLEAU I

La trame contient 125 blocs OFDM et a une durée T$_f$ de 20 ms :

- Le premier bloc est le bloc nul durant lequel rien n'est transmis ($x_k$ = 0, k = 0, N-1). Il est utilisé pour synchroniser le début de la trame.
- Le deuxième est le bloc AFC (contrôle automatique en fréquence) utilisé pour la synchronisation en fréquence de l'oscillateur local du récepteur par rapport à celui de l'émetteur.
- Le troisième est le bloc de wobulation défini par :

$$x_k = \sqrt{2}\, e^{j\phi_k}, \phi_k = \pi\, \frac{k^2}{N} + \pi/4$$

Le bloc de wobulation est utilisé comme bloc de référence pour le codage différentiel et aussi pour estimer la réponse impulsionnelle du canal afin de synchroniser précisément le début de la trame.

- Les quatrième et cinquième blocs sont des blocs supplémentaires pouvant servir à transmettre des données de service.
- Finalement, on a les 120 blocs OFDM de données.

Une trame contient 100 mots de code générés par le codeur de canal.

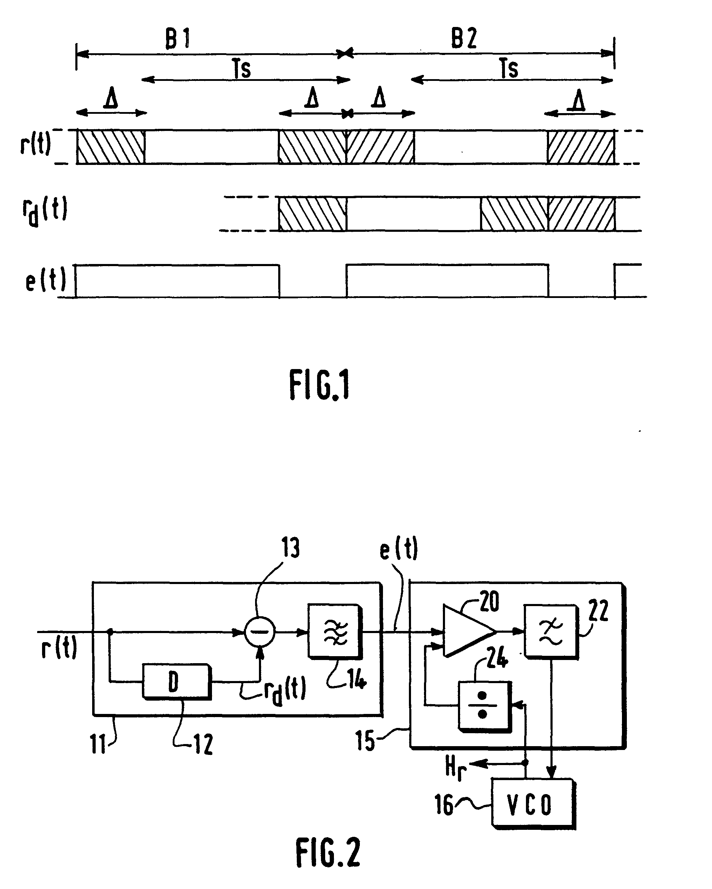

L'invention met à profit l'existence d'un intervalle de garde dans chaque bloc d'une trame OFDM. La figure 1 représente deux blocs consécutifs B1 et B2. L'explication qui va suivre s'applique à tous les blocs. Les blocs B1/B2 sont formés d'un intervalle de garde de durée Δ suivi d'un intervalle utile de durée T$_S$ qui contient des données utiles. Dans un bloc émis, les données qui apparaissent en fin de l'intervalle utile T$_S$ sont copiées en début de bloc avant leur émission sur le canal. On observe donc que dans chaque bloc une information identique apparaît en début et en fin de bloc. Sur la figure 1, le signal reçu est le signal r(t). Ce signal r(t) est retardé par des moyens de retard d'un retard tel que l'information de début du signal retardé r$_d$(t) soit en phase avec l'information de fin du signal non retardé r(t).

Pour un même bloc B1, ces deux informations sont identiques. En effectuant une opération de soustraction de ces deux signaux, on obtient un signal e(t) qui est formé d'un intervalle de durée $\Delta$ où e(t) est nul précédé d'un intervalle de durée $T_S$ où il est non nul. Sur la figure 1, le signal e(t) est représenté sous la forme de créneaux mais en réalité ce signal présente une forme plus complexe et plus sinusoïdale, ayant une fréquence fondamentable égale à la fréquence bloc. Il est donc possible par filtrage d'isoler cette fréquence bloc.

La figure 2 représente un schéma d'un dispositif selon l'invention qui permet d'isoler la fréquence bloc et d'asservir un oscillateur qui oscille à la fréquence rythme des symboles initiaux de la modulation codée. Des moyens 11 permettent de générer le signal d'écart e(t) à la fréquence bloc. Les moyens 11 comprennent des moyens de filtrage accordé 14. Le signal r(t) est retardé dans des moyens de retards 12 pour fournir le signal $r_d$(t). Les signaux r(t) et $r_d$(t) sont soustraient l'un de l'autre dans des moyens de soustraction 13 et délivrent le signal d'écart e(t). Ce signal d'écart e(t) est au préalable filtré dans un filtre passe-bande 14 accordé sur la fréquence de blocs utilisée à l'émission.

Le signal d'écart entre dans une boucle 15 d'asservissement de phase. Elle est destinée à asservir un oscillateur local 16 de type VCO qui oscille en mode libre sur une fréquence proche de la fréquence rythme des symboles de la modulation codée. La boucle 15 est formée d'un comparateur 20, d'un filtre passe-bas 22 et d'un diviseur de fréquence 24. A titre d'exemple, la fréquence du signal e(t) peut être égale à 12,5 KHz et la fréquence de l'oscillateur être voisine de 16 MHz. Le signal de sortie du filtre 22 (12,5 KHz) asservit la fréquence de l'oscillateur 16. Pour réduire la fréquence du signal de l'oscillateur à une fréquence de 12,5 KHz pour que la boucle 15 puisse fonctionner, il faut insérer un diviseur de fréquence 24. Dans l'exemple cité, il faut effectuer une division par un facteur 1280. Lorsque le verrouillage est effectué, la sortie de l'oscillateur délivre l'horloge de rythme Hr.

## Revendications

1.  Système de transmission comprenant un émetteur et un récepteur de signaux, ledit récepteur comportant des moyens de corrélation, caractérisé en ce que:

    -   lesdits signaux étant formatés en blocs, lesdits blocs étant issus de symboles d'une constellation et comportant chacun des informations, dites informations identiques, constituées par une partie de l'information utile transmise dans le bloc et une copie de cette partie placée en décalage dans ledit bloc avant l'émission,
    -   lesdits moyens de corrélation effectuent une corrélation entre lesdites informations identiques pour générer un signal dit signal d'écart dont la fréquence est représentative de la fréquence bloc, ledit signal d'écart étant fourni à des moyens d'asservissement à division de fréquence pour asservir un oscillateur à la fréquence symbole du signal reçu.

2.  Système de transmission selon la revendication 1, caractérisé en ce que les moyens de corrélation comprennent des moyens de retard retardant les signaux reçus d'un délai séparant lesdites informations identiques, pour générer ledit signal d'écart.

3.  Système selon l'une des revendications 1 ou 2, caractérisé en ce que les moyens de corrélation sont adaptés pour corréler, par soustraction, lesdites informations identiques.

4.  Récepteur de signaux comportant des moyens de corrélation, caractérisé en ce que:

    -   lesdits signaux étant formatés en blocs, lesdits blocs étant issus de symboles d'une constellation et comportant chacun des informations, dites informations identiques, constituées par une partie de l'information utile transmise dans le bloc et une copie de cette partie placée en décalage dans ledit bloc avant l'émission,
    -   lesdits moyens de corrélation effectuent une corrélation entre lesdites informations identiques pour générer un signal dit signal d'écart dont la fréquence est représentative de la fréquence bloc, ledit signal d'écart étant fourni à des moyens d'asservissement à division de fréquence pour asservir un oscillateur à la fréquence symbole du signal reçu.

5.  Récepteur selon la revendication 4, caractérisé en ce que les moyens de corrélation comprennent des moyens de retard retardant les signaux reçus d'un délai séparant lesdites informations identiques, pour générer ledit signal d'écart.

6.  Récepteur selon l'une des revendications 4 ou 5, caractérisé en ce que les moyens de corrélation sont adaptés pour corréler, par soustraction, lesdites informations identiques.

**Patentansprüche**

1. Übertragungssystem mit einem Sender und einem Empfänger von Signalen, wobei der genannte Empfänger Korrelationsmittel aufweist, dadurch gekennzeichnet, dass

   - die genannten Signale in Blöcken formatiert sind, wobei diese Blöcke von Symbolen einer Konstellation herrühren und je Informationen enthalten, die als identische Informationen bezeichnet werden, gebildet aus einem Teil der Nutzinformation, die in dem Block übertragen worden ist, und aus einer Kopie dieses Teils, die in der Zeit in dem genannten Block vor dem Senden verschoben ist,
   - die genannten Korrelationsmittel zwischen den genannten identischen Informationen eine Korrelation herbeiführen zum Erzeugen eines Signals, das als Differenzsignal bezeichnet wird, dessen Frequenz repräsentativ ist für die Blockfrequenz, wobei das genannte Differenzsignal Frequenzteiler-Steuermitteln zugeführt wird zum Steuern eines Frequenzoszillators mit der Symbolfrequenz des empfangenen Signals.

2. Übertragungssystem nach Anspruch 1, dadurch gekennzeichnet, dass die Korrelationsmittel Verzögerungsmittel aufweisen, welche die empfangenen Signale um eine Zeitperiode verzögern, die das erste und das zweite Mal, dass dieselbe Information auftritt, trennt, zum Erzeugen des genannten Differenzsignals.

3. System nach einem der Ansprüche 1 oder 2, dadurch gekennzeichnet, dass die genannten Korrelationsmittel vorgesehen sind zum Korrelieren, durch Subtraktion, der genannten identischen Informationen.

4. Empfänger für Signale, mit Korrelationsmitteln, dadurch gekennzeichnet, dass

   - die genannten Signale in Blöcken formatiert sind, wobei diese Blöcke von Symbolen einer Konstellation herrühren und je Informationen enthalten, die als identische Informationen bezeichnet werden, gebildet aus einem Teil der Nutzinformation, die in dem Block übertragen worden ist, und aus einer Kopie dieses Teils, die in der Zeit in dem genannten Block vor dem Senden verschoben ist,
   - die genannten Korrelationsmittel zwischen den genannten identischen Informationen eine Korrelation herbeiführen zum Erzeugen eines Signals, das als Differenzsignal bezeichnet wird, dessen Frequenz repräsentativ ist für die Blockfrequenz, wobei das genannte Differenzsignal Frequenzteiler-Steuermitteln zugeführt wird zum Steuern eines Frequenzoszillators mit der Symbolfrequenz des empfangenen Signals.

5. Empfänger nach Anspruch 4, dadurch gekennzeichnet, dass die Korrelationsmittel Verzögerungsmittel aufweisen, welche die empfangenen Signale um eine Zeitperiode verzögern, die das erste und das zweite Mal, dass dieselbe Information auftritt, trennt, zum Erzeugen des genannten Differenzsignals.

6. Empfänger nach Anspruch 4 oder 5, dadurch gekennzeichnet, dass die Korrelationsmittel vorgesehen sind zum Korrelieren, durch Subtraktion, der genannten identischen Informationen.

**Claims**

1. A transmission system comprising a signal transmitter and receiver, said transmitter comprising correlation means, characterized in that:

   - with said signals being formatted in blocks, said blocks come from symbols of a constellation and comprise each useful information signals called identical information signals formed by part of the useful information transmitted in the block and a copy of this part placed at a shifted position in said block prior to transmission,
   - while said correlation means effect a correlation between said identical information signals for generating a signal called difference signal whose frequency is representative of the frequency block, said difference signal is delivered to frequency-division control means for slaving an oscillator to the symbol frequency of the received signal.

2. A transmission system as claimed in Claim 1, characterized in that the correlation means comprise delay means delaying the received signals with a delay thus separating said identical information signals, to generate said difference signal.

3. A system as claimed in Claim 1 or 2, characterized in that the correlation means are adapted to correlate the identical information signals via subtraction.

4. A signal receiver comprising correlation means, characterized in that:

- with said signals being formatted in blocks, said blocks come from symbols of a constellation and comprise each useful information signals called identical information signals formed by part of the useful information transmitted in the block and a copy of this part placed at a shifted position in said block prior to transmission,
- said correlation means effecting a correlation between said identical information signals for generating a signal called difference signal whose frequency is representative of the frequency block, said difference signal being delivered to frequency-division control means for slaving an oscillator to the symbol frequency of the received signal.

5. A receiver as claimed in Claim 4, characterized in that the correlation means comprise delay means delaying the signals received with a delay separating said identical information signals, to generate said difference signal.

6. A receiver as claimed in Claim 4 or 5, characterized in that the correlation means are adapted to correlate said identical information signals via subtraction.

FIG.1

FIG.2